# EUROPÄISCHE PATENTSCHRIFT

(11) **EP 0 612 399 B1**
(45) Veröffentlichungstag und Bekanntmachung des Hinweises auf die Patenterteilung: **03.01.1996**
(21) Anmeldenummer: 92922256.0
(22) Anmeldetag: 29.10.1992
(51) Int. Cl.: G01F 1/40, G01F 1/22, F16K 5/10

(54) **GERÄT ZUR MESSUNG DES LUFTDURCHFLUSSES IN MELKANLAGEN**
AIR FLOW METER FOR MILKING MACHINES
APPAREIL DE MESURE DU DEBIT D'AIR DANS DES INSTALLATIONS DE TRAITE

(30) Priorität: 16.11.1991 DE 4137811
(43) Veröffentlichungstag der Anmeldung: 31.08.1994
(73) Patentinhaber: Westfalia Separator AG, D-59302 Oelde (DE)
(72) Erfinder: BILGERY, Erwin, CH-8590 Romanshorn (CH)
(86) Internationale Anmeldenummer: EP9202467
(87) Internationale Veröffentlichungsnummer: WO9310421

(56) Entgegenhaltungen:
- EP-A- 0 370 557
- DE-B- 1 187 385
- US-A- 1 456 621

## Beschreibung

Die Erfindung bezieht sich auf ein Meßgerät zur Messung des Luftdurchflusses in Melkanlagen, bestehend aus einem geschlossenen Gehäuse mit einem Anschlußstutzen für die auf Durchfluß und Druck zu prüfende Leitung, wobei das Gehäuse eine Lufteinlaßvorrichtung besitzt.

Ein derartiges Meßgerät ist aus der DE-OS 17 57 838 bekannt und dient dazu, die Fördermenge einer zur Melkanlage gehörenden Vakuumpumpe unter verschiedenen Betriebsbedingungen zu messen. Diese Messungen müssen in bestimmten Zeitabständen wiederholt werden, und die Meßergebnisse müssen mit den entsprechenden Vorschriften in den einzelnen Ländern übereinstimmen.

Bei dem bekannten Meßgerät besteht die Lufteinlaßvorrichtung aus kalibrierten Bohrungen und diese Bohrungen abdekkenden drehbaren Scheiben. Wegen des auf den Scheiben lastenden Druckes setzen die Scheiben einer Verdrehung einen beträchtlichen Widerstand entgegen. Außerdem kann die Einstellung nur in Stufen vorgenommen werden, wodurch zwischen diesen Stufen liegende Werte nicht einstellbar sind. Auch kann es zu einem Verstopfen der Bohrungen und damit zu Fehlmessungen kommen.

Der Erfindung liegt die Aufgabe zugrunde, ein Meßgerät zur Messung des Luftdurchflusses in Melkanlagen zu schaffen, mit dem eine stufenlose Einstellung des Luftdurchflusses bei kleinen Verstellkräften möglich ist.

Diese Aufgabe wird durch die Merkmale des kennzeichnenden Teils von Anspruch 1 gelöst.

Die Reibungskräfte zwischen dem Drehschieber und dem Lufteinlaßstutzen sind nur sehr gering, so daß eine feinfühlige und schnelle Einstellung des Luftdurchsatzes möglich ist. Durch den sich stetig erweiternden Durchbruch im Drehschieber wird bei dessen Drehung eine stufenlose Veränderung des Durchlaßquerschnittes erreicht. Durch die besondere Ausgestaltung ist die Lufteinlaßvorrichtung unempfindlich gegen Verschmutzung und weist dadurch eine hohe Reproduzierfähigkeit auf.

Der Lufteinlaßstutzen ist radial beweglich zum Gehäuse angeordnet. Dadurch wird eine spielfreie Zuordnung vom Lufteinlaßschlitz zum Drehschieber erreicht.

Eine besonders gute Abdichtung zwischen dem Lufteinlaßstutzen und dem Drehschieber wird dadurch erzielt, daß der Lufteinlaßstutzen unter Federspannung steht, die auf den Drehzylinder gerichtet ist, womit gleichzeitig die Oberfläche des Drehschiebers saubergehalten wird.

Bei einer weiteren vorteilhaften Ausgestaltung steht der Drehschieber mit einem Untersetzungsgetriebe in Verbindung. Dadurch ist eine noch feinfühligere Einstellung möglich, und die Verstellkräfte werden weiter reduziert.

Eine weitere vorteilhafte Ausgestaltung ist dadurch gekennzeichnet, daß das Untersetzungsgetriebe mit einem Antriebsmotor verbunden ist. Der Antriebsmotor ermöglicht eine Automatisierung des Meßvorganges in Verbindung mit einem entsprechenden Steuergerät. Wegen der geringen Stellkräfte kann der Antriebsmotor und damit auch der Stromverbrauch klein gehalten werden. Dies ist besonders vorteilhaft, weil an den Meßorten in der Regel keine externe Stromquelle vorhanden ist und die Stromversorgung daher über eine Energiequelle erfolgen muß, die z. B. in dem zum Meßgerät gehörenden Steuergerät vorgesehen sein kann. Das Steuergerät einschließlich der Stromversorgung kann auch ein integrierter Bestandteil des Gehäuses (1) darstellen.

Weitere vorteilhafte Ausgestaltungen sind in den restlichen Unteransprüchen wiedergegeben.

Ein Ausführungsbeispiel der Erfindung ist in der Zeichnung dargestellt und wird nachstehend näher erläutert. Es zeigt
Fig. 1 einen Querschnitt durch das Meßgerät
Fig. 2 den Schnitt II - II gemäß Fig. 1
Fig. 3 die Ansicht "X" gemäß Fig. 1

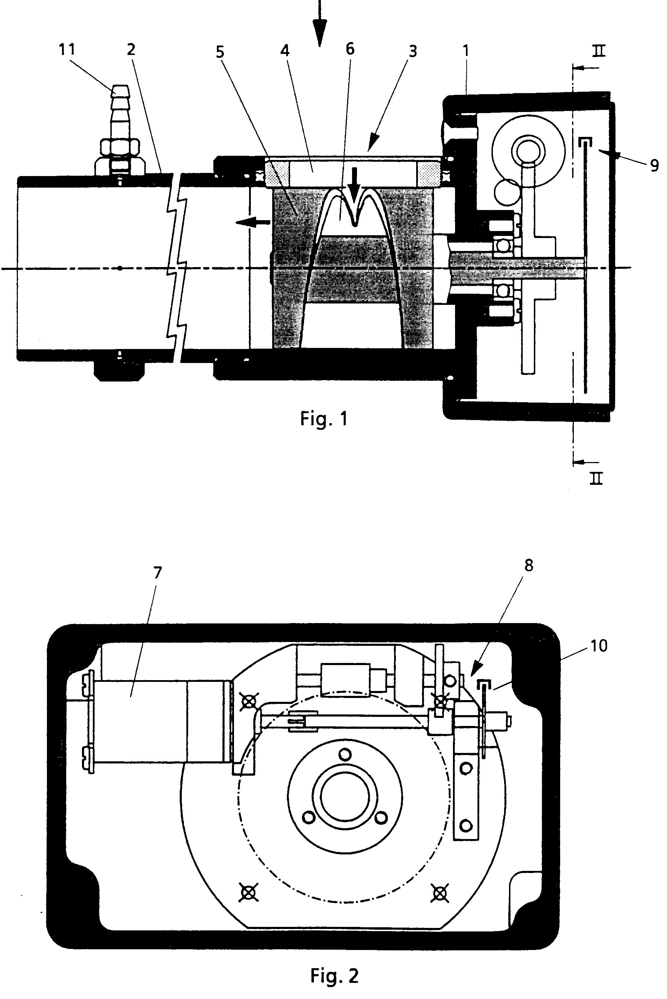

In der Fig. 1 ist mit 1 das Gehäuse bezeichnet, das mit einem Anschlußstutzen 2 und einer Lufteinlaßvorrichtung 3 versehen ist. Die Lufteinlaßvorrichtung 3 besteht aus einem an der Außenseite des Gehäuses 1 vorgesehenen Lufteinlaßstutzen 4 und einem diesem im Innenraum des Gehäuses 1 zugeordneten Drehschieber 5, der an seinem Umfang mit einem sich stetig erweiternden Durchbruch 6 versehen ist, von dem durch Verdrehen des Drehschiebers 5 ein beliebiger Teilbereich mit dem Lufteinlaßstutzen 4 in Verbindung bringbar ist. Wie aus der Fig. 2 ersichtlich, erfolgt das Verdrehen des Drehschiebers 5 über einen Antriebsmotor 7 unter Zwischenschaltung eines Untersetzungsgetriebes 8. Die absolute Stellung des Drehschiebers 5 wird über einen ersten Drehwinkelgeber 9 an ein nicht dargestelltes Steuergerät weitergegeben, das auch eine Energiequelle zum Betrieb des Antriebsmotors 7 enthält. Dem Antriebsmotor 7 ist ein zweiter Drehwinkelgeber 10 zugeordnet, der zur Feinpositionierung des Drehschiebers 5 dient. Am Anschlußstutzen 2 ist ein Meßstutzen 11 angeordnet, an dem ein Vakuummeter angeschlossen werden kann, über das die Druckinformation zum Steuergerät geleitet wird.

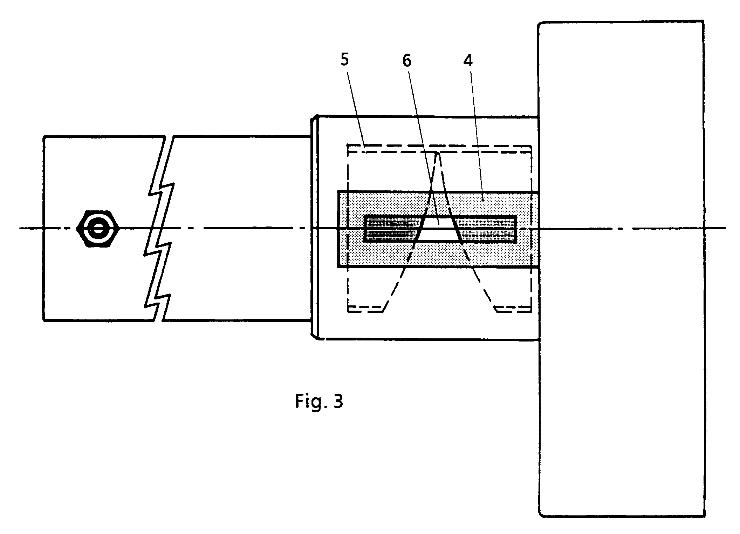

Aus der Fig. 3 ist zu erkennen, daß die lichte Weite des Lufteinlaßstutzens 4 in Umfangsrichtung des Drehschiebers 5 nur einen Bruchteil der Erstreckung des Durchbruches 6 in Umfangsrichtung des Drehschiebers 5 beträgt, so daß durch Verdrehen des Drehschiebers 5 ein beliebiger Teilbereich des Durchbruches 6 mit dem Lufteinlaßstutzen 4 in Verbindung gebracht werden kann. Wegen des sich stetig erweiternden Durchbruches 6, der sich über einen wesentlichen Teil des Umfanges des Drehschiebers 5 erstreckt, ist eine sehr feinfühlige Einstellung des Luftdurchflusses möglich.

Zu jeder Stellung des Drehschiebers 5 gehört ein bestimmter Luftdurchsatz und Differenzdruck. Die entsprechenden Werte sind im zugehörigen Steuergerät gespeichert. Auch der in der am Meßstutzen 11 ermittelte Unterdruck wird in dem Steuergerät verarbeitet, indem der Drehschieber 5 in eine Stellung gebracht wird, bei der ein vorgeschriebener Druck erreicht wird. Im Steuergerät ist die gesamte Meßprozedur programmiert, und der gesamte Meßvorgang kann dadurch vollautomatisch ablaufen. Die gemessenen Werte werden angezeigt und protokolliert. Da keine Bedienungsperson in den Meßvorgang eingreift, sind die Ergebnisse frei von möglichen Bedienungsfehlern, wie sie bei manuell betätigten Meßgeräten unvermeidlich sind.

## Patentansprüche

1. Meßgerät zur Messung des Luftdurchflusses in Melkanlagen, bestehend aus einem geschlossenen Gehäuse (1) mit einem Anschlußstutzen (2) für die auf Durchfluß und Druck zu prüfende Leitung, wobei das Gehäuse eine Lufteinlaßvorrichtung besitzt, dadurch gekennzeichnet, daß an der Außenseite des Gehäuses (1) ein Lufteinlaßstutzen (4) angeordnet ist, dessen Öffnungsquerschnitt durch Verdrehen zu einem im Innenraum des Gehäuses (1) vorgesehenen Durchbruch (6) veränderbar ist, wobei der Durchbruch (6) sich stetig erweiternd in einem Drehschieber (5) angeordnet ist und sich über einen wesentlichen Teil dessen Umfanges erstreckt, der Lufteinlaßstutzen (4) eine schlitzförmige Öffnung besitzt dessen Längsachse parallel zur Rotationsachse des Drehschiebers (5) verläuft, die lichte Weite des Lufteinlaßstutzens (4) in Umfangsrichtung des Drehschiebers (5) nur einen Bruchteil der Erstreckung des Durchbruches (6) beträgt, durch Verdrehen des Drehschiebers (5) ein beliebiger Teilbereich des Durchbruches (6) mit der Öffnung des Lufteinlaßstutzens (4) in Verbindung bringbar ist und der Lufteinlaßstutzen (4) radial beweglich zum Gehäuse (1) angeordnet ist.

2. Meßgerät nach Anspruch 1, dadurch gekennzeichnet, daß der Lufteinlaßstutzen (4) unter Federspannung steht, die auf den Drehschieber (5) gerichtet ist.

3. Meßgerät nach einem der Ansprüche 1 bis 2, dadurch gekennzeichnet, daß der Drehschieber (5) mit einem Untersetzungsgetriebe (8) in Verbindung steht.

4. Meßgerät nach einem der Ansprüche 1 bis 3, dadurch gekennzeichnet, daß das Untersetzungsgetriebe (8) mit einem Antriebsmotor (7) verbunden ist.

5. Meßgerät nach einem der Ansprüche 1 bis 4, dadurch gekennzeichnet, daß dem Drehschieber (5) ein erster Drehwinkelgeber (9) zugeordnet ist.

6. Meßgerät nach einem der Ansprüche 1 bis 5, dadurch gekennzeichnet, daß dem Antriebsmotor (7) ein zweiter Drehwinkelgeber (10) zugeordnet ist.

## Claims

1. Measuring device for measuring the air flow rate in milking installations consisting of a closed housing (1) with a connection piece (2) for the line to be checked for pressure and air flow, whereby the housing is provided with an air inlet device, **characterised in that** an air inlet socket (4) is arranged on the exterior of the housing (1) whose opening cross-section can be altered relative to an opening (6) provided in the housing interior by turning, whereby the opening constantly widens in a rotary slide valve (5) and stretches over a substantial part of the latter's circumferance, the air inlet socket (4) features a slit-shaped opening whose longitudinal axis runs parallel to the rotational axis of the rotary slide valve (5), the inside diameter of the air inlet socket (4) in the direction of the circumferance is only a fraction of the span of the opening (6), any partial area of the opening (6) can be brought into connection with the opening of the air inlet socket (4) by turning the rotary slide valve (5) and the air inlet socket (4) can be moved radially relative to the housing (1).

2. Measuring device according to claim 1, characterised in that the air inlet socket (4) is under spring tension, which is directed onto the rotary slide valve (5).

3. Measuring device according to claim 1 or 2, characterised in that a connection exists between the rotary slide valve (5) and a step-down gear (8).

4. Measuring device according to one of the claims 1 to 3, characterised in that the step-down gear (8) is connected with a drive motor (7).

5. Measuring device in accordance with one of the claims 1 to 4, characterised in that the rotary slide valve is provided with a first rotational angle transmitter (9).

6. Measuring device according to one of the claims 1 to 5, characterised in that the drive motor (7) is provided with a second rotational angle transmitter (10).

## Revendications

1. Appareil de mesure du débit d'air dans des installations de traite, constitué par un boîtier fermé (1) muni d'une tubulure de raccord (2) pour la conduite dont le débit et la pression sont à contrôler, le boîtier possédant un dispositif d'entrée d'air, **caractérisé en ce que** un embout d'entrée d'air (4) est disposé au côté extérieur du boîtier (1), la section d'ouverture de l'embout pouvant être réglée en le tournant envers un ajour (6) prévu à l'intérieur du boîtier (1), l'ajour (6), s'évoluant en continu, étant disposé dans un tiroir tournant (5) et occupant une grande partie de la surface de celui-ci, l'embout d'entrée d'air ayant une fente dont l'axe longitudinale est parallèle par rapport à l'axe de rotation du tiroir (5), le diamètre intérieur de l'embout d'entrée d'air (4) n'occupant qu'une partie de l'étendue de l'ajour (6) en direction de la circonférence du tiroir (5) ; en faisant tourner le tiroir (5), on peut faire coincider une section quelconque de l'ajour (6) avec l'embout d'entrée d'air, et l'embout d'entrée d'air se laisse déplacer radialement par rapport au boîtier d'air.

2. Appareil de mesure selon revendication 1, caractérisé en ce que l'embout d'entrée d'air (4) est exposé à une tension de ressort agissant en direction du tiroir tournant (5)

3. Appareil de mesure selon revendication 1 ou 2, caractérisé en ce que le tiroir tournant (5) communique avec un mécanisme réducteur (8)

4. Apareil de mesure selon l'une des revendications 1 à 3, caractérisé en ce que le mécanisme réducteur (8) est relié à un moteur d'entraînement (7)

5. Appareil de mesure selon l'une des revendications 1 à 4, caractérisé en ce qu'un premier transmetteur d'angle de rotation (9) est attribué au tiroir tournant (5)

6. Appareil de mesure selon l'une des revendications 1 à 5, caractérisé en ce qu'un second transmetteur d'angle de rotation (10) est attribué au moteur d'entraînement (7)
